# EUROPÄISCHE PATENTSCHRIFT

(11) **EP 0 743 698 B1**
(45) Veröffentlichungstag und Bekanntmachung des Hinweises auf die Patenterteilung: **20.08.2003**
(21) Anmeldenummer: 96810312.7
(22) Anmeldetag: 17.05.1996
(51) Int. Cl.: H01Q 1/32, H01Q 13/20, H04B 5/00

(54) **Übertragungsvorrichtung für verkehrstechnische Kommunikationssysteme**
Transmitting device for traffic communication systems
Dispositif de transmission pour systèmes de communications routières

(30) Priorität: 17.05.1995 CH 144395; 29.08.1995 CH 245095
(43) Veröffentlichungstag der Anmeldung: 20.11.1996
(73) Patentinhaber: Siemens Schweiz AG, 8047 Zürich (CH)
(72) Erfinder: Lauper, Alfred, 8047 Zürich (CH); Loder, Max, 8906 Bonstetten (CH); Bächtiger, Rolf, 8966 Oberwil-Lieli (CH); Henggeler, Timon, 8254 Basadingen (CH)
(74) Vertreter: Berg, Peter, Dipl.-Ing.

(56) Entgegenhaltungen:
- DE-A- 1 917 007
- DE-A- 2 501 583
- DE-A- 2 812 523
- DE-A- 2 835 241
- DE-A- 2 914 485
- DE-B- 1 098 064
- NL-A- 9 202 158
- US-A- 3 731 314
- US-A- 3 984 073
- US-A- 5 084 699
- FUNKSCHAU, Bd. 47, Nr. 13, 1975, MUNCHEN DE, Seiten 66-68, XP002011026 BRETTING : "Abstrahlende Hochfrequenzleitung zur Bahnsteig-Überwachung"
- PATENT ABSTRACTS OF JAPAN vol. 13, no. 133 (M-809), 4.April 1989 & JP-A-63 301167 (MATSUSHITA ELECTRIC), 8.Dezember 1988,
- MOTOROLA TECHNICAL DEVELOPMENTS, Bd. 17, Dezember 1992, SCHAUMBURG, ILLINOIS US, Seiten 142-144, XP000329524 COOK: "NOVEL APPLICATIONS OF RADIATING FEEDER"

## Beschreibung

Die vorliegende Erfindung betrifft ein Verfahren und eine Übertragungsvorrichtung nach dem Oberbegriff des Patentanspruchs 1.

Zur Übertragung von Informationen zwischen Elementen eines Kommunikationssystems werden oft Trägerfrequenzen im oberen Radiowellenbereich verwendet. Besonders in der Verkehrstechnik, bei der Kommunikation von Fahrzeugen mit Baken oder Transpondem, können bei der Verwendung elektromagnetischer Wellen Probleme entstehen. Nachteilig ist z.B., dass durch elektromagnetische Wellen leicht Störungen von weiteren Kommunikationssystemen ins System eingekoppelt werden können. Zudem werden elektromagnetische Wellen durch Ablagerungen (Schmutz, Schnee oder Wasser) über der Strahlungsantenne gedämpft, da die elektrische Komponente der Welle beim Durchdringen dieser Schichten reflektiert wird.

Deshalb wird in den aus der EP-A-0 534 577 oder der EP-A-0 535 549 bekannten Kommunikationssystemen für die Eisenbahntechnik die induktive Übertragung in tiefen Frequenzbereichen angewendet. Für die Abstrahlung der Signale werden in diesen Systemen Linienleiter verwendet, die zwischen den Schienen schleifenförmig anzuordnen sind. Diese Antenne weist daher einen Hin- und einen Rückleiter auf. Dies ist u.a. ein Grund für die verhältnismässig hohen Dämpfungsverluste dieses Antennensystems, die sogar noch deutlich ansteigen können, wenn der Linienleiter mit Schnee oder Wasser bedeckt wird oder wenn ein Betrieb in höheren Frequenzbereichen vorgesehen wird. Durch Kreuzungen der Linienleiter wird bei diesen Systemen eine oft notwendige Positionsbestimmung der Fahrzeuge erreicht. Insbesondere durch den dadurch entstehenden hohen Aufwand bei der Montage der Linienleiter (EP-A-0 534 577, Zeichnung) resultieren hohe Kosten für dieses Systems. Aus DE 1 098 064 sind Befestigungsmittel für eine direkte Montage am Gleis bekannt. Femer behindert dieser Linienleiter den automatisierten Gleisunterhalt. Ober die Linienleiter werden normalerweise sicherheitsrelevante Steuersignale zu den Fahrzeugen übertragen. Aus DE 1 917 007 ist eine Wendelleitung bekannt, welche zur induktiven Datenübertragung eingesetzt wird. Durch die spezielle Ausgestaltung dieser Leitung ist diese Anordnung relativ aufwendig. In DE 1 917 007 wird bei einer Montage direkt am Gleis vorgeschlagen, dass der Röckleiter zwecks besserer Entkopplung entweder in der Gleismitte oder ausserhalb des Gleises anzuordnen sei. Dies birgt jedoch wieder die erwähnten Nachteile für den Gleisunterhalt. Zur Übertragung zusätzlicher grösserer Datenmengen zwischen Fahrzeugen und Leitstelle oder Transpondem ist nebst diesem System zur induktiven Übertragung mit Linienleitem ein weiteres normalerweise im Hochfrequenzbereich arbeitendes Übertragungssystem vorzusehen. Gespräche zwischen dem Fahrzeugführer und dem Leitstellenpersonal werden z.B. über ein spezielles Funknetz abgewickelt.

In Eisenbahntunnels werden z.B. auch Leckkabel (abstrahlende Koaxialkabel) eingesetzt, die zur Abstrahlung und zum Empfang hochfrequenter elektromagnetischer Signale dienen. Aus der EP-A2- 0 122 497 ist bekannt, dass zur Erzielung der gewünschten Abstrahlungs- und Empfangseigenschaften Öffnungen in der Abschirmung des Kabels vorzusehen sind, durch die elektromagnetische Wellen passieren können, wodurch ein Radiofrequenz-Feld um das Leckkabel aufgebaut wird. Bekannt ist zudem (s. z.B. U.S. Pat. 5'231'414 oder EP-A2-0 502 337), dass die Öffnungen in der Abschirmung in Abhängigkeit der Wellenlänge der übertragenen RF-Signale zu wählen sind. Dazu ist aus der DE-A-2 812 523 bekannt, im Vergleich zur verwendeten Wellenlänge relativ kleine Öffnungen im Abstand der verwendeten Wellenlänge in der Abschirmung des strahlenden Koaxialkabels anzubringen. Auch bei der Übertragung von elektromagnetischen Wellen mittels einem Leckkabel treten jedoch erhöhte Dämpfungsverluste auf, falls das Kabel mit Schnee oder Wasser bedeckt wird. Gemäss DT 25 01 583 A1 können die Nachteile solcher Systeme zur Übertragung von elektrischen Feldern mittels Koaxialkabel durch mechanische Massnahmen verringert werden, indem in geeigneten Abständen Erdverbindungen realisiert werden. Dies bedeutet jedoch einen sehr grossen Aufwand und Behindert den Gleisunterhalt massiv, da diese Verbindungen während Unterhaltsarbeiten gelöst werden müssen.

Der vorliegenden Erfindung liegt daher die Aufgabe zugrunde, eine insbesondere für die Anwendung im Schienenverkehr vorgesehene, kostengünstge Übertragungsvorrichtung zu schaffen, die leicht installierbar ist, wenig Dämpfungsverluste aufweist, einen automatisierten Gleisunterhalt erlaubt und einen störungsfreien Betrieb gewährleistet.

Diese Aufgabe wird durch die im Patentanspruch 1 angegebenen Massnahmen gelöst. Vorteilhafte Ausgestaltungen der Erfindung sind in weiteren Ansprüchen angegeben.

Die erfindungsgemässe Übertragungsvorrichtung kann insbesondere in Eisenbahnanlagen problemlos installiert werden. Dazu wird ein Koaxialkabel verwendet, das aufgrund von Öffnungen in der Abschirmung, ein magnetisches Feld erzeugt, das für die induktive Übertragung von Daten von der Schiene bzw. von erdgebundenen Kommunikationseinheiten oder einer Leitstelle hin zu einem Fahrzeug und zurück geeignet ist. Besonders vorteilhaft ist dabei, dass praktisch keine Dämpfungserscheinungen auftreten, falls das Koaxialkabel z.B. durch Schnee oder Wasser überdeckt wird. Ein weiterer Vorteil der erfindungsgemässen Vorrichtung ist, dass über das Koaxialkabel gleichzeitig auch elektromagnetische Wellen übertragen werden können. Sicherheitsrelevante Daten werden induktiv übertragen. Grössere u.U. nicht sicherheitsrelevante Daten, z.B. Fahrgastgespräche oder Rundfunksendungen, können zusätzlich mittels elektromagnetischen Wellen übertragen werden. Das Koaxialkabel wird entlang der Eisenbahnschiene in einer Schienenkehle oder nahe beim Schienenfuss verlegt. Diese kostengünstige Montage ergibt einen zuverlässigen Schutz gegen schädigende Einwirkungen, die z.B. durch herunterhängende Kupplungsteile verursacht werden. Ferner erfolgt beim Befahren der Geleise automatisch eine Räumung des Gebietes in unmittelbarer Nähe der Schienen, wodurch das montierte Koaxialkabel von gegebenenfalls vorhandenem Schnee und Eis befreit wird. Ferner werden die Unterhaltsarbeiten am Gleis durch das derart installierte Koaxialkabel nicht behindert. Der Empfang auf dem Fahrzeug erfolgt mit Antennen, die auf das Magnetfeld ansprechen. Störende elektromagnetische Einstrahlungen von anderen Systemen können daher wirkungsvoll unterdrückt werden. Vorteilhaft bei der Verwendung eines Koaxialkabels ist ferner, dass Möglichkeiten zur Positionsbestimmung von Fahrzeugen mit geringem zusätzlichen Material- und Installationsaufwand geschaffen werden können.

Die Erfindung wird nachfolgend anhand einer Zeichnung beispielsweise näher erläutert. Dabei zeigt:
- Fig. 1: ein Fahrzeug, das über Schienen geführt wird, die mit einem Koaxialkabel versehen sind,
- Fig. 2: ein an einer Schiene montiertes Koaxialkabel,
- Fig. 3: ein Koaxialkabel, das drei verschiedene koaxial angeordnete Metalleiter aufweist,
- Fig. 4: eine mit einem Ferritstab versehene Antenne,
- Fig. 5: ein mit einem Phasenumkehmetzwerk versehenes Koaxialkabel,
- Fig. 6: eine erfindungsgemässe Übertragungsvorrichtung,
- Fig. 7: ein induktiv an ein Antennensystem angekoppeltes Koaxialkabel,
- Fig. 8: das Ersatzschaltbild des In Fig. 7 gezeigten Übertragungssystems und
- Fig. 9: eine Abschlusseinheit für das Koaxialkabel.

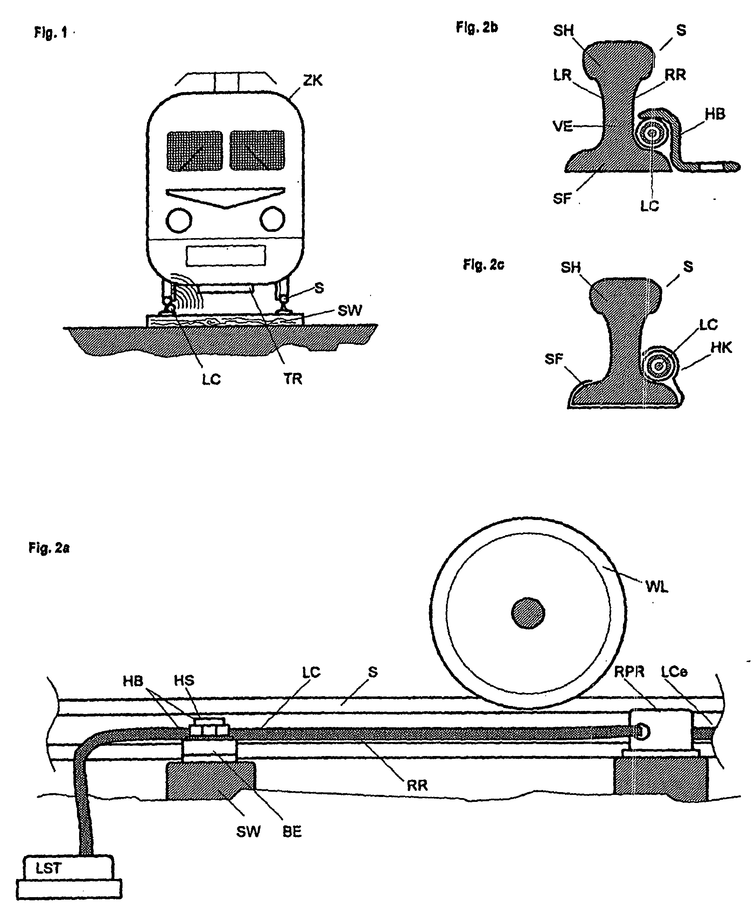

Fig. 1 zeigt ein auf Schienen S geführtes Fahrzeug ZK, das mit einer mobilen Kommunikationseinheit TR versehen ist, die Signale über einen Luftspalt und ein zum Empfang der Signale vorgesehenes Koaxialkabel LC an eine erdgebundene Leitstelle LST oder Bake übermittelt. Der vorzugsweise bidirektionale Datenaustausch zwischen einem Fahrzeug ZK und einer Bake erfolgt normalerweise durch Übertragung mehrerer Telegramme bei der Überfahrt des Fahrzeugs ZK über die Bake innerhalb eines Bruchteils einer Sekunde. Probleme treten bei der Verwendung von solchen annähernd punktförmigen Strahlungsquellen auf, falls in einem bestimmten Streckenbereich z.B. aus Sicherheitsgründen der dauemde Kontakt zwischen der Bake oder einer Leitstelle und dem Fahrzeug ZK gewährleistet sein soll oder, falls bei der Überfahrt des Fahrzeugs ZK über eine Bake/jeweils sehr grosse Datenmengen übertragbar sein sollen.

Zur Lösung dieser Probleme wird die Leitstelle oder die Bake erfindungsgemäss mit einem Koaxialkabel LC verbunden, das nahe dem Schienenfuss SF (siehe Fig. 2b), vorzugsweise in der Schienenkehle, verlegt wird und das induktiv an eine in der mobilen Kommunikationseinheit TR vorgesehene Antenne A ankoppelbar ist. Da das erfindungsgemäss eingesetzte Koaxialkabel LC bei magnetischer Informationsübertragung eine geringe Längsdämpfung aufweist und mit geringen Kosten montierbar ist, kann dessen Installation kostengünstig für das gesamte Streckennetz einer Bahn vorgesehen werden. Zur Signalaufbereitung vorgesehene Verstärkerstationen RPR (Repeater), wie in Fig. 2a gezeigt, werden daher nur benötigt, falls das Koaxialkabel LC bzw. LCe über grössere Distanzen geführt wird. Das Koaxialkabel LC weist nebst den Isolationsschichten wenigstens einen Innenleiter und eine Abschirmung auf, die den Austritt des magnetischen Feldes ermöglicht. Das elektrische Feld wird zur Übertragung der Informationen über den Luftspalt nicht benötigt und soll vorzugsweise nicht aus der Abschirmung austreten, wodurch eine minimale Kabeldämpfung erzielt wird. Die Öffnungen in der Abschirmung sind daher vorzugsweise derart auszugestalten und anzuordnen, dass ihre Abmessungen klein im Vergleich mit der Wellenlänge der verwendeten Übertragungsfrequenz sind.

Wie in Fig. 1 und detailliert in Fig. 2a, Fig. 2b und Fig. 2c dargestellt, wird das Koaxialkabel LC vorzugsweise in eine der Ausnehmungen an der Innen- oder Aussenseite einer Schiene S eingelegt und bei Kreuzungsstellen z.B. unter dem Weichenherz hindurchgeführt. Eisenbahnschienen S weisen angenähert einen Doppel-T-Querschnitt auf (siehe Fig. 2b). Der Fuss SF der Schiene S ist durch Befestigungsmittel BE mit einer Schwelle SW verbunden. Der Kopf SH der Schiene S, der über ein Verbindungselement VE mit dem Schienenfuss SF verbunden ist, weist eine Lauffläche für die Räder WL des Fahrzeugs ZK auf. Beidseits jeder Schiene S ist daher eine Ausnehmung LR bzw. RR vorhanden, die durch den Schienenfuss SF, den Schienenkopf SH und das zugehörige Verbindungselement VE einseitig umfasst wird. Erfindungsgemäss wird das Koaxialkabel LC in eine dieser Ausnehmungen LR, RR der Schiene S (also innen oder aussen) eingelegt und vorzugsweise mit einem zusätzlichen Haltebügel HB durch die Befestigungsmittel BE gehalten. Vorzugsweise wird das Koaxialkabel LC auf der Innenseite eines Schienenpaares angeordnet und gegen den Schienenfuss SF gedrückt, so dass die Sendesignale auf möglichst kurzem Weg zu der am Fahrzeug ZK vorgesehenen Kommunikationseinheit TR gelangen können. Von Bedeutung bei der in Fig. 2 gezeigten Anordnung ist, dass das vom Koaxialkabel LC abgegebene Signal durch die das Koaxialkabel LC umfassende Schiene S überraschenderweise nicht störend beeinträchtigt wird. Weiterhin sind die erfindungsgemäss montierten Koaxialkabel LC besser gegen mechanische Einwirkungen geschützt, die das Übertragungsverhalten des Koaxialkabels LC beeinträchtigen könnten. Zur Optimierung der Übertragungsverhältnisse könnten femer an beiden Schienen S eines Schienenpaares Koaxialkabel LC montiert werden. Z.B. kann ein erfindungsgemäss verlegtes Koaxialkabel LC z.B. entlang der linken Schiene S nach vom und entlang der rechten Schiene S wieder zurück geführt werden.

Aus Fig. 2a und Fig. 2b ist femer ersichtlich, dass das Koaxialkabel LC sehr einfach montiert werden kann. Vorzugsweise kann der Haltebügel HB unter eine der zur Befestigung der Schiene S vorgesehenen Schrauben HS geschoben und fixiert werden. Altemativ dazu könnten Mittel vorgesehen sein, durch die der Haltebügel HB mit der Schraube HS verbindbar ist. Z.B. könnte im Kopf der Schraube HS ein Gewinde für eine Schraube vorgesehen sein, durch die der Haltebügel HB befestigt werden kann. Noch einfacher ist die Montage des Koaxialkabels LC bei der Verwendung der in Fig. 2c dargestellten Halteklammer HK, die mit dem Schienenfuss SF verbunden ist und zum Einlegen des Koaxialkabels LC geöffnet werden kann.

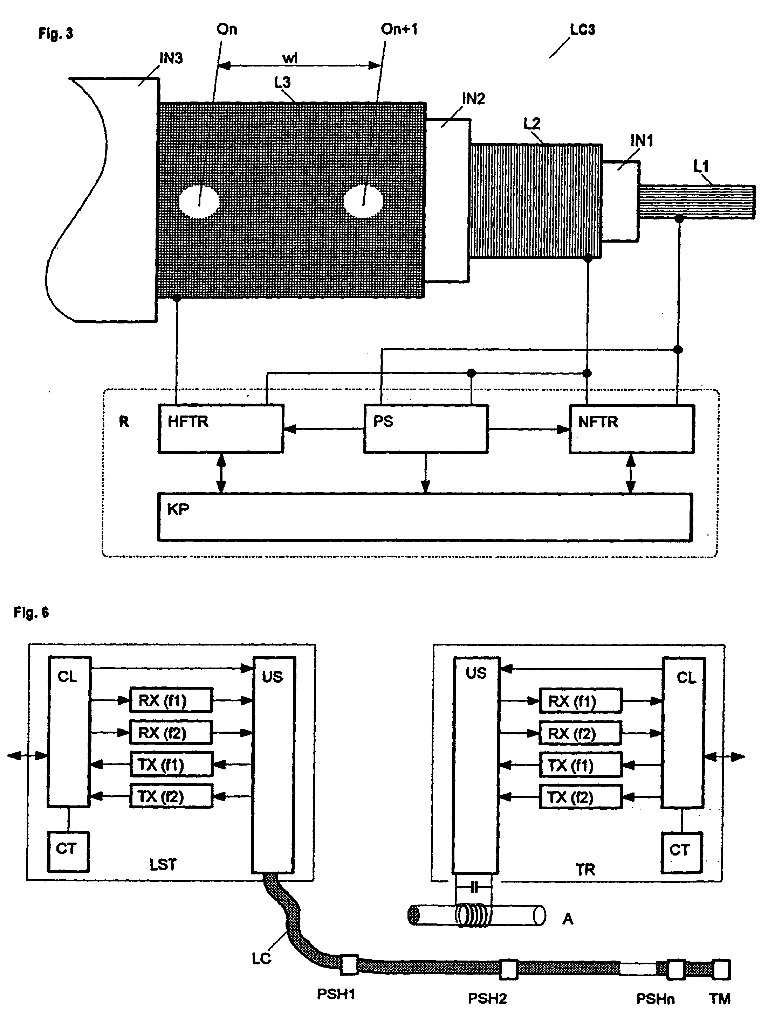

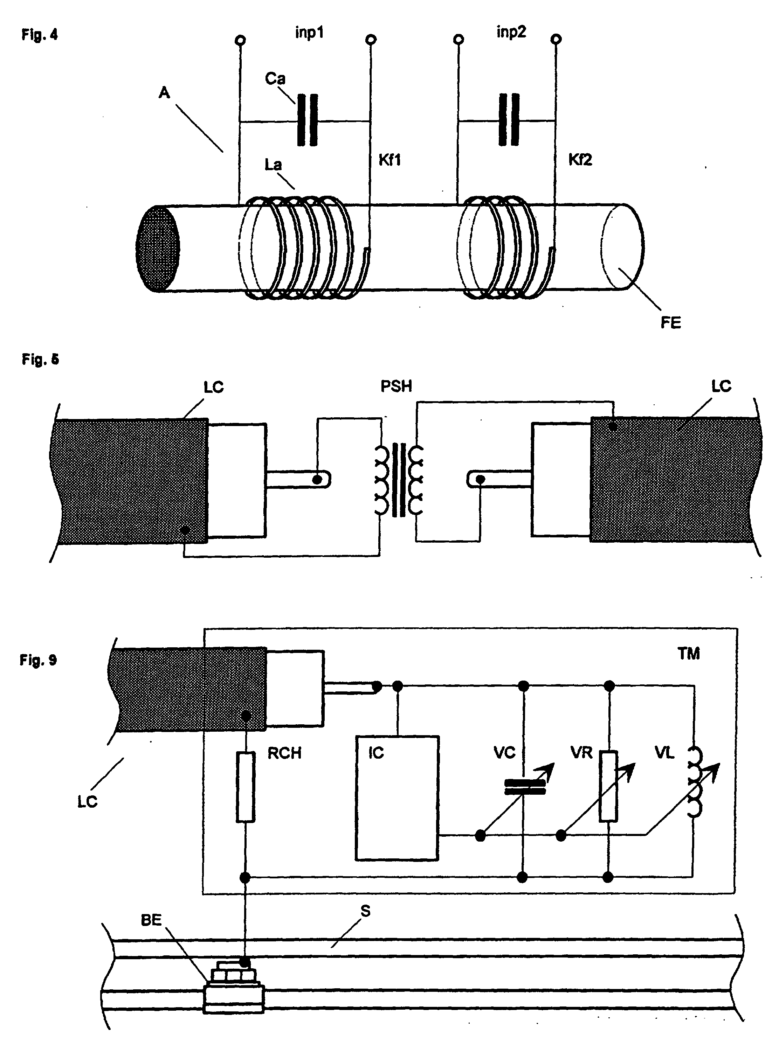

Das erfindungsgemäss verwendete und entsprechend plazierte Koaxialkabel LC entspricht In einer vorzugsweisen Ausgestaltung demjenigen von Fig. 3 (LC3), das mit drei koaxial geführten Leitem L1, L2 und L3, zwei Isolationsschichten IN1, IN2 sowie einem Aussenmantel IN3 versehene ist. Über den ersten und zweiten Leiter L1 und L2 erfolgt die Stromversorgung einer Verstärkerstation RPR oder einer Bake R sowie der normalerweise bidirektionale Datenverkehr mit einer Leitstelle LST. Dieser Datenverkehr zwischen den erdgebundenen Kommunikationseinheiten erfolgt bevorzugt ohne Modulation, im Basisband, Über den dritten Leiter L3, der als Kabelabschirmung z.B. mit Öffnungen O1, ..., On, On+1 versehen ist, und z.B. den zweiten Leiter L2 erfolgt die Kommunikation mit den mobilen Kommunikationseinheiten TR. Die Abstrahlung und der Empfang von entsprechenden Hochfrequenzsignalen erfolgt wie oben beschrieben. Ober spezielle Öffnungen O1, ..., On, On+1 in der Kabelabschirmung bzw. im dritten Leiter L3 kann zur Schaffung zusätzlicher Übertragungskanäle der Austritt elektrischer Felder ermöglicht werden (diese Massnahme kann selbstverständlich auch für Koaxialkabel LC mit nur zwei Leitern L1, L2 vorgesehen werden). Zur Optimierung der Übertragungsverhältnisse für einen solchen Frequenzbereich der Sendesignale werden die Öffnungen O1, ..., On, On+1 in der Grössenordnung des Abstandes der Wellenlänge der Mittenfrequenz dieses Frequenzbereichs entlang dem Koaxialkabel LC3 angeordnet.

Eine an das Koaxialkabel LC3 anzuschliessende erdgebundene Bake R ist beispielsweise wie in Fig. 3 ausgestaltet. Die Bake R weist einen ersten Transponder NFTR für den Empfang und die Abgabe von niederfrequenten Signalen, einen zweiten Transponder HFTR für den Empfang und die Abgabe von hochfrequenten Signalen sowie einen Kommunikationsprozessor KP und eine Stromversorgungseinheit PS auf, die zur Stromversorgung der Module NFTR, HFTR und KP vorgesehen ist. Der Eingang der Stromversorgungseinheit PS ist mit dem ersten und zweiten Leiter L1, L2 verbunden, an denen eine Gleichspannung anliegt oder über die von der Leitstelle LST eine Wechselspannung übertragen wird. Dieses Wechselspannungssignal, das in der Stromversorgungseinheit PS gleichgerichtet wird, kann ein von der Leitstelle LST übertragenes Datensignal oder ein speziell für die Stromversorgung vorgesehenes Signal sein. Der erste und der zweite Leiter L1, L2 sind femer mit einem Ein- und Ausgang des ersten Transponders NFTR verbunden, der über einen bidirektionalen Datenbus mit dem Kommunikationsprozessor KP weiterverbunden ist. Der zweite Transponder HFTR ist in gleicher Weise mit dem zweiten und dritten Leiter L2, L3 des Koaxialkabels LC3 sowie mit dem Kommunikationsprozessor KP verbunden. Der zweite Transponder HFTR, der wie der erste Transponder NFTR eine Sende- und eine Empfangseinheit aufweist, beinhaltet zudem einen Modulator und einen Demodulator, durch die die empfangenen Signale demoduliert und die zu übertragenen Daten auf ein Trägersignal moduliert werden können. Ein von der Leitstelle LST über den ersten und zweiten Leiter L1, L2 eintreffendes unmoduliertes Signal wird daher im ersten Transponder NFTR aufbereitet und an den Kommunikationsprozessor KP abgegeben und dort gespeichert. Vom Kommunikationsprozessor KP werden die empfangenen Daten über den zweiten Transponder HFTR an die mobilen Kommunikationseinheiten TR übertragen. Normalerweise werden von einer mobilen Kommunikationseinheit TR Abfragesignale ausgesendet, die über den zweiten und dritten Leiter L2, L3 des Koaxialkabels LC3 zu einer Bake R gelangen, welche durch den Kommunikationsprozessor KP die empfangenen und demodulierten Signale interpretiert und entsprechende Antwortsignale über den zweiten Transponder HFTR und das Koaxialkabel LC3 zur mobilen Kommunikationseinheit TR oder über den Transponder NFTR und das Koaxialkabel LC3 zur Leitstelle LST überträgt.

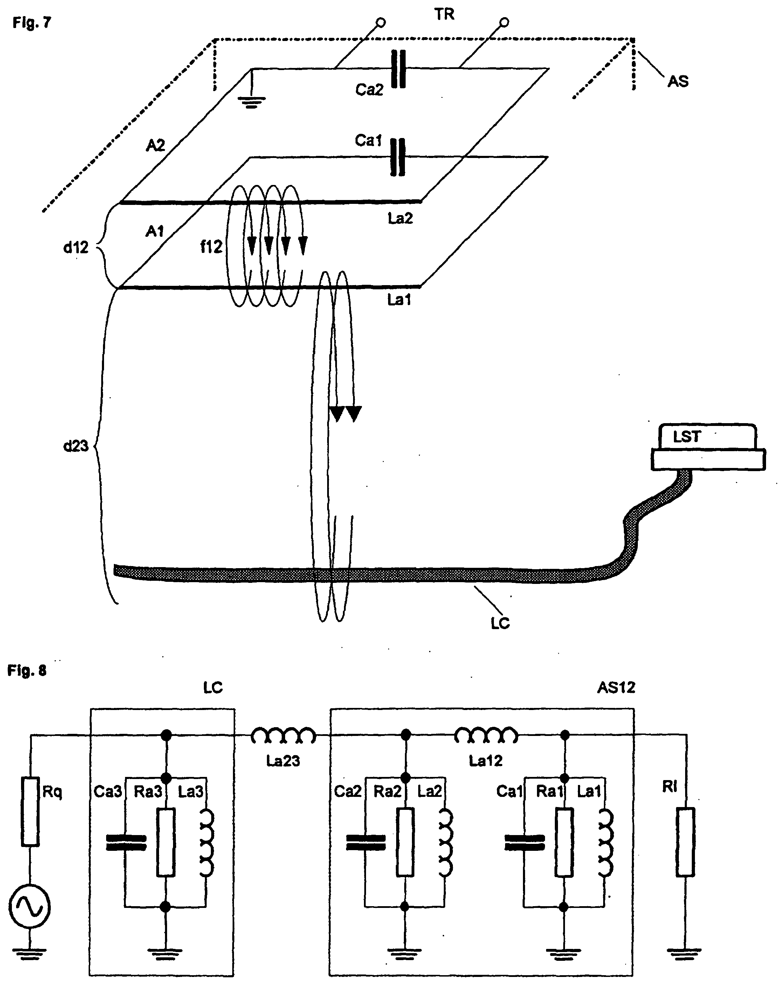

Von Bedeutung bei der Realisierung der erfindungsgemässen Lösung ist, dass die in der mobilen Kornmunikationseinheit TR vorgesehene Antenne A derart ausgestaltet ist, dass durch das vom Koaxialkabel LC abgegebene magnetische Wechselfeld in der Antenne A eine hohe Signalspannung induziert wird. Die Antenne A besteht dabei aus einer Induktivität La1 bzw. einer in das magnetische Wechselfeld eingreifenden Schlaufe, die mit einer Kapazität Ca1 verbunden ist. Dadurch wird ein Schwingungssystem gebildet, das mit der Ein- und/oder Ausgangsstufe der mobilen Kommunikationseinheit TR verbunden ist. Vorteilhafterweise wird die Antenne A mit einer Abschirmung AS (siehe Fig. 7) aus nichtmagnetischem Material verbunden, wodurch Ein- und Ausstrahlungen von elektromagnetischen Wellen unterdrückt werden.

Fig. 7 zeigt ein Antennensystem, das durch zwei aneinander angekoppelte Resonanzkreise bzw. Antennen A1, A2 gebildet wird, die eine Spule La1; La2 und einen damit verbundenen Kondensator Ca1; Ca2 aufweisen. Die Spulen La1 und La2, die z.B. durch einen langgezogenen Draht, eine Koaxialleitung oder einen auf einer Platine (printed circuit board) aufgedruckten Metallstreifen gebildet wird, weisen einen gegenseitigen Abstand d12 auf, über den eine magnetische Kopplung bewirkt wird. Durch die Änderung des Abstandes d12 kann daher der gewünschte Kopplungsgrad eingestellt werden. Ober dem Kondensator Ca1, der z.B. durch parallel liegende Metallstreifen gebildet wird, kann das empfangene Signal mit maximaler Spannung abgegriffen und der Eingangsstufe der Kommunikationseinheit TR zugeführt werden. Beide Antennen sind schmalbandig auf ein Signal abgestimmt, das über ein Koaxialkabel LC abgestrahlt wird. Die aneinander angekoppelte erste und zweite Antenne A1 und A2 bilden ein Schwingungssystem, das zwei ausgeprägte Eigenfrequenzen f1, f2 aufweist, die sich um so weniger voneinander unterscheiden, je schwächer die Kopplung zwischen der ersten und zweiten Antenne A1, AZ ist Die Durchlasskurve dieses Schwingungssystems entspricht daher derjenigen eines Bandpassfilters. Gekoppelte Schwingkreise, die z.B. aus Dobrinski / Krakau / Vogel, Physik für Ingenieure, Teubner Verlag, Stuttgart 1976, 4. Auflage, Kapitel 5.1.8.2, Seiten 316 / 317, Bild 316.1 bekannt sind, wurden bisher in Eingangs- oder Zwischenfrequenzstufen von Rundfunkempfängem eingesetzt

Durch die induktive Ankopplung des Koaxialkabels LC an das durch die Antennen A1 und A2 gebildete Schwingungssystem entsteht ein System mit drei schwingungsfähigen Einzelsystemen gleicher Eigenfrequenz, dessen Durchlasskurve angenähert einem Rechteck entspricht und im Vergleich zur Durchlasskurve eines breitbandigen Schwingkreises im Durchlassbereich deutlich geringere Dämpfungen aufweist. Die resultierende Durchlasskurve wird daher durch die Güte der Einzelsysteme sowie durch den Grad der gegenseitigen Kopplung bzw. durch die Wahl der Abstände d12 und d23 bestimmt

Das Ersatzschaltbild des durch die Antennen A2, A1 und das Koaxialkabel LC gebildeten Schwingungssystems mit Quelle, Quellenwiderstand Rq, Lastwiderstand Rl sowie Verlustwiderständen Ra1, Ra2 und Ra3 der Resonanzkreise ist in Fig. 8 dargestellt. Gezeigt sind femer virtuelle Ersatzinduktivitäten La12, La23, welche aufgrund der gewählten Kopplung rechnerisch ermittelt werden können.

Während dieses breitbandige Antennensystem in der Rundfunktechnik oft kaum vorteilhaft anwendbar ist, z.B. weil die erforderliche Bandbreite insbesondere im Bereich der Radio- und Fernsehfrequenzen praktisch immer vorhanden ist, weil genügend Sendeleistung vorhanden ist und weil die Antennen des Systems stabil installiert werden können, können im Gegensatz dazu Übertragungssysteme der Verkehrstechnik, die in Zukunft zur Übertragung von hohen Datenraten vorgesehen werden und die bei relativ tiefen Sendeleistungen sowie tiefen Frequenzen von 0,1 MHz bis etwa 50 MHz arbeiten, durch den Einsatz des erfindungsgemässen Antennensystems deutlich verbessert werden. Bei geringerem Bandbreitenbedarf kann das Koaxialkabel LC natürlich auch nur an eine Antenne A angekoppelt werden.

Eine bevorzugte Ausgestaltung der Antenne A ist femer in Fig. 4 gezeigt. Durch die Verwendung eines von einer Spule La umwickelten Ferritstabes FE, der entsprechend dem Verlauf der magnetischen Feldlinien ausgerichtet ist, wird die aus dem Koaxialkabel LC austretende magnetische Feldkomponente optimal erfasst. Störende elektrische Felder hingegen werden weitgehend unterdrückt. Durch die Spule La und den dazu parallel geschalteten Kondensator Ca wird ein auf die Sendefrequenz abgestimmter Parallelresonanzkreis für eine Frequenz f1 gebildet, der mit der Ein- oder Ausgangsstufe der mobilen Kommunikationseinheit TR verbunden ist. Da über das Koaxialkabel LC auch Signale in anderen Frequenzbereichen übertragen werden können, ist die Antenne A mit einem weiteren auf die Frequenz f2 abgestimmten Resonanzkreis versehen. Möglich ist femer die Verwendung einer zweiten speziell auf den Empfang elektromagnetischer Wellen ausgerichteter Antenne.

Zur Positionsbestimmung von Fahrzeugen und zur Verhinderung gegenseitiger magnetischer Kopplungen bei mehreren benachbarten Systemen müssen in Systemen mit Linienleitem, wie sie in der EP-A1-0 534 577 beschrieben sind, Kreuzungsstellen vorgesehen werden. Dies bedingt einen relativ hohen Material- und Installationsaufwand. Bei der Verwendung eines Koaxialkabels LC werden erfindungsgemäss, wie in Fig. 5 oder 6 gezeigt, an den betreffenden Stellen des Koaxialkabels LC phasenschiebende Elemente PSH, z.B. sogenannte Allpass- oder Phasenumkehmetzwerke montiert, durch die örtlich ein Phasensprung des Signals bewirkt wird, ohne die Signalamplitude zu beeinträchtigen. Durch eine Zählung der auftretenden Phasensprünge bei der Durchfahrt des Fahrzeugs ZK kann daher dessen Position und bei unregelmässigen Abständen die Fahrtrichtung bestimmt werden. Beispielsweise kann als phasenschiebendes Element PSH auch ein Transformator verwendet werden, der einen Phasensprung von z.B. 180° bewirkt.

Das Koaxialkabel LC weist im Gegensatz zu dem aus der EP-A1-0 534 577 bekannten Linienleiter auch in höheren Frequenzbereichen ein gutes Übertragungs- und Abstrahlungsverhalten auf. Nebst der induktiven Übertragung von Signalen sind daher auch die bekannten Verfahren zur Übertragung hochfrequenter elektromagnetischer Wellen parallel einsetzbar. Dazu ist das Koaxialkabel LC und gegebenenfalls benötigte Öffnungen in der Abschirmung vorzugsweise entsprechend der Wellenlänge dieser Signale zu wählen. Die induktive Übertragung wird dadurch nicht tangiert.

Fig. 6 zeigt eine erfindungsgemässe Übertragungsvorrichtung bestehend aus einer Leitstelle LST, die über ein Koaxialkabel LC und eine Antenne A mit einer mobilen Kommunikationseinheit TR gekoppelt ist. Zur Positionsbestimmung der mobilen Kommunikationseinheit TR weist das Koaxialkabel LC in festgelegten Abständen phasenschiebende Elemente PSH1, ..., PSHn auf. Durch einen Zähler CT in der Leitstelle oder in der Kommunikationseinheit TR kann, daher die Position des Fahrzeugs ZK bestimmt. werden. Die Leitstelle LST und die mobile Kommunikationseinheit TR enthalten wenigstens je eine auf den vorgesehenen Übertragungskanal abgestimmte Sende- und eine Empfangseinheit TX; RX, die gesteuert durch eine Steuereinheit CL über einen Umschalter US mit dem Koaxialkabel LC bzw. der Antenne A verbindbar sind. Die Leitstelle LST und das Fahrzeug ZK weisen zudem einen Rechner bzw. Bordrechner auf, der z.B. zur Auswertung der übertragenen Daten sowie für Steuerzwecke vorgesehen ist und in den normalerweise der Zähler CT integriert ist.

Obwohl die Übertragung hochfrequenter Signale über das Magnetfeld erfolgt, das das Koaxialkabel LC bei Frequenzen in unteren Megahertz-Bereich umgibt, können an verschiedenen Orten längs des Koaxialkabel LC Auslöschungen der Signale auftreten. Dieser Effekt tritt auch dann auf, wenn das strahlende Koaxialkabel LC am Ende mit der charakteristischen Wellenimpedanz abgeschlossen ist. Der Grund dafür liegt in der sogenannten Mantelwelle, die die im Kabelinneren laufende Welle begleitet und in mehr oder weniger regelmässigen Abständen derart interferieren kann, dass die nicht erwünschten Auslöschungen zustande kommen. Die Signalübertragung kann dann an einigen Stellen entlang des Koaxialkabels LC unterbrochen sein. Ein stillstehendes Fahrzeug kann dann unter Umständen nicht mehr erreicht werden. Erfindungsgemäss wird daher dafür gesorgt, dass die Signalauslöschungen entlang dem Koaxialkabel LC wandem, so dass ein stillstehendes Fahrzeug nur für eine sehr kurze Zeit (im Bereich von Millisekunden) den Kontakt mit der Leitstelle LST verlieren kann.

In einer ersten Ausführung wird das strahlende Kabel am Ende mit einer Abschlusseinheit TM (siehe Fig. 6 und Fig. 9) elektrisch variabel abgeschlossen, so dass die sogenannten stehenden Wellen, die entlang dem Koaxialkabel LC zu beobachten sind, in ihrer Lage verändert werden können. Die Fig. 9 dargestellte Abschlusseinheit TM funktioniert wie folgt:

Ein Signalgeber in der Leitstelle LST, z.B. ein niederfrequenter Oszillator gibt ein Signal ab, das ebenfalls über das strahlende Koaxialkabel LC (vorzugsweise wird das in Fig. 3 gezeigte Koaxialkabel LC3 gewählt) übertragen wird und dort, z.B. durch eine Steuereinheit IC elektronische Schaltelemente und somit die Abschlussimpedanz im Takt der niederfrequenten Schwingung im Wert verändert. Nach dem Stand der Technik können hier verschiedene bekannte Bauelemente, die elektronisch veränderbar sind, verwendet werden (z.B. Kapazitätsdioden VC oder PIN-Dioden als gesteuerte Widerstände VR in Serie zu den Blindelementen oder variable Spulen VL). Dadurch ändert sich der Amplitudenverlauf der Welle längs dem Koaxialkabel LC (bzw. LC3). Ein Fahrzeug, das z.B. bei einer Auslöschung steht, erhält durch die Abschlussimpedanz-Modulation immer wieder erhöhte Pegelwerte, so dass die benötigten Übertragungsbedingungen zumindest periodenweise gegeben sind. Die Modulationsfrequenz ist möglichst so zu wählen, dass pro Periode wenigstens ein zusammenhängendes Telegramm übertragen werden kann.

Eine zweite Ausführungsart wäre so zu realisieren, dass für den Abschluss des strahlenden Kabels eine Fehlanpassung (z.B. Kurzschluss) gewählt wird und die niederfrequente Impedanzmodulation quellenseitig, d.h. in der Sendeeinheit der Leitstelle LST vorgenommen wird.

Um Reflexionen der Mantelwelle am Ende des Koaxialkabels LC bzw. LC3 zu verhindern, wird dessen Mantel bzw. dessen Abschirmung über einen Widerstand RCH mit der Schiene S verbunden (siehe Fig. 9). Die Grösse des Widerstandes RCH wird entsprechend dem Wellenwiderstand des die Mantelwelle führenden Leitungssystems gewählt, das durch Kabelmantel und Schiene gebildet wird. Dieser Wellenwiderstand ist abhängig von den Abmessungen des Koaxialkabels LC bzw. LC3 sowie der Schiene S und liegt im Bereich von rund 50 Ω bis 300 Ω. Die variable Abschlussimpedanz und der zur Vermeidung von Reflexionen der Mantelwelle vorgesehene Abschlusswiderstand können daher alternativ oder nach Bedarf kumulativ vorgesehen werden.

## Patentansprüche

1. Übertragungsvorrichtung zur Übertragung von Daten zwischen einer auf einem Schienenfahrzeug (ZK) montierten mobilen Kommunikationseinheit (TR) und einer erdgebundenen Kommunikationseinheit (LST), wobei
die erdgebundene Kommunikationseinheit (LST) zur Abstrahlung und/oder zum Empfang von Signalen über ein zumindest teilweise parallel zu den für die Fahrzeuge (ZK) vorgesehenen Schienen (S) geführtes Koaxialkabel (LC) mit der mobilen Kommunikationseinheit (TR) verbunden ist, das Koaxialkabel zur berührungslosen Ankopplung an eine Antenne (A, A1) der mobilen Kommunikationseinheit (TR) vorgesehen ist,
das Koaxialkabel (LC) mehrere Oeffnungen (O; Oₙ, Oₙ₊₁) aufweist, die den Eintritt und den Austritt eines Wechselfeldes erlauben,
die Länge der Oeffnungen (O; Oₙ, Oₙ₊₁) im Vergleich zur Wellenlänge der Trägerfrequenz des Wechselfeldes klein ist und
der Abstand der Oeffnungen in der Grössenordnung der Wellenlänge des Wechselfeldes liegt, **dadurch gekennzeichnet, dass**
die Uebertragung induktiv mittels eines magnetischen Wechselfeldes im Frequenzbereich von 0,1 MHz bis 50 MHz erfolgt und
das Koaxialkabel (LC) auf dem Schienenfuss (SF) oder in einer Ausnehmung (LR oder RR) der Schiene (S) angeordnet ist, die einseitig durch den Schienenfuss (SF), den Schienenkopf (SH) und den Schienenhals (VE) gebildet wird.

2. Vorrichtung nach Anspruch 1,
**dadurch gekennzeichnet, dass**
das Koaxialkabel (LC) an wenigstens einer Schwelle (SW) durch Haltebügel (HB) oder Halteklammem (BE, HB) befestigt ist.

3. Vorrichtung nach einem der Ansprüche 1 bis 2,
**dadurch gekennzeichnet, dass**
das Koaxialkabel (LC) mit zur Signalaufbereitung vorgesehenen Verstärkern (RPR) und/oder mit phasenschiebenden Elementen (PSH1, ..., PSHn) versehen ist, die zur Bestimmung der Position und/oder der Fahrtrichtung des Schienenfahrzeugs (ZK) dienen.

4. Vorrichtung nach einem der Ansprüche 1 bis 3,
**dadurch gekennzeichnet, dass**
die Antenne (A, A1) der mobilen Kommunikationseinheit (TR) von einer nichtmagnetischen Abschirmung (AS) aus nichtumagnetischem Material umfasst wird, die zur Unterdrückung electromagnetischer Wellen vorgesehen ist.

5. Vorrichtung nach Anspruch 4,
**dadurch gekennzeichnet, dass**
in der mobilen Kommunikationseinheit (TR) eine zweite Antenne (A2) vorgesehen ist, die induktiv an die 10 erste Antenne (A1) angekoppelt ist und die zumindest annähernd dieselbe Eigenfrequenz wie die erste Antenne (A1) aufweist.

6. Vorrichtung nach Anspruch 5,
**dadurch gekennzeichnet, dass**
5 die Induktivitäten der Antennen (A, A1, A2) um einen Ferritkem (FE) gewickelte Spulen (La) aufweisen.

7. Vorrichtung nach einem der Ansprüche 1 bis 6,
**dadurch gekennzeichnet, dass**
das Koaxialkabel (LC3) aus drei koaxial geführten und je von einer Isolationsschicht (IN1; IN2; IN3) 0 umhüllten Leitern (L1, L2, L3) besteht, dass die erdgebundene Kommunikationseinheit (R) und die Leitstelle (LST) über den ersten und den zweiten Leiter (L1, L2) miteinander verbunden sind und dass die zur Übertragung zu den mobilen Kommunikationseinheiten (Q) vorgesehenen Daten vom dritten Leiter (L3) abgestrahlt werden.

8. Vorrichtung nach Anspruch 7,
**dadurch gekennzeichnet, dass**
der dritte Leiter (L3) die mit Öffnungen (O) versehene äussere Abschirmung des Koaxialkabels (LC3) bildet.

9. Vorrichtung nach einem der Ansprüche 1 bis 8,
**dadurch gekennzeichnet, dass**
die feste und/oder die mobile Kommunikationseinheit (TR; LST) wenigstens je eine auf den vorgesehenen Datenkanal abgestimmte Sende- und Empfangsstufe (RX; TX) aufweisen, die über einen Umschalter (US) mit dem Koaxialkabel (LC) bzw. der Antenne (A, A1) verbindbar sind.

10. Vorrichtung nach einem der Ansprüche 1 bis 9,
**dadurch gekennzeichnet, dass**
das Koaxialkabel (LC) an eine Abschlusseinheit (TM) abgeschlossen ist, deren Impedanz durch die Leitstelle (LST) änderbar ist oder dass die Impedanz des Quellenwiderstandes der Leitstelle (LST) zur Vermeidung stationärer Signalnullstellen entlang des Koaxialkabels (LC) veränderbar ist.

11. Vorrichtung nach einem der Ansprüche 1 bis 10,
**dadurch gekennzeichnet, dass**
die Abschirmung des Koaxialkabels (LC; LC3) zur Vermeidung von Reflexionen der Mantelwelle über einen Widerstand (RCH) mit der Schiene (S) verbunden ist, wobei die Grösse des Widerstandes (RCH) entsprechend dem Wellenwiderstand des die Mantelwelle führenden Leitungssystems gewählt ist.

## Claims

1. Transmission device for transmitting data between a mobile communications unit (TR) mounted on a rail vehicle (ZK) and a ground-based communications unit (LST),
where
the ground-based communications unit (LST) for emitting and/or for receiving signals via a coaxial cable (LC) routed at least in part in parallel to the rails (S) provided for the vehicles (ZK) is connected to the mobile communications unit (TR),
the coaxial cable is provided for non-contact interfacing to an antenna (A, A1) of the mobile communications unit (TR),
the coaxial cable (LC) has a plurality of openings (O; Oₙ, Oₙ₊₁) which permit the entry and exit of an alternating field,
the length of the openings (O; Oₙ, Oₙ₊₁) is small in comparison to the wavelength of the carrier frequency of the alternating field and the spacing of the openings is in the order of magnitude of the wavelength of the alternating field,
**characterised in that**
transmission takes place inductively by means of a magnetic alternating field in the frequency range between 0.1 MHz and 50 MHz, and
the coaxial cable (LC) is arranged on the rail foot (SF) or in a recess (LR or RR) of the rail (S), which is formed on one side by the rail foot (SF), the rail head (SH) and the rail neck (VE).

2. Device according to Claim 1, **characterised in that** the coaxial cable (LC) is affixed to at least one threshold (SW) by retaining clips (HB) or retaining brackets (BE, HB).

3. Device according to one of Claims 1 to 2, **characterised in that** the coaxial cable (LC) has amplifiers (RPR) provided for signal conditioning and/or phase-shifting elements (PSH1, ..., PSHn) which serve to determine the position and/or the direction of travel of the rail vehicle (ZK).

4. Device according to one of Claims 1 to 3, **characterised in that** the antenna (A, A1) of the mobile communications unit (TR) contains a non-magnetic shield (AS) made of non-magnetic material, which is provided in order to suppress electromagnetic waves.

5. Device according to Claim 4, **characterised in that** a second antenna (A2) is provided in the mobile communications unit (TR), said second antenna (A2) being inductively connected to the first antenna (A1) and having at least approximately the same natural frequency as the first antenna (A1).

6. Device according to Claim 5, **characterised in that** the inductances of the antennas (A, A1, A2) have coils (La) wound around a ferrite core (FE).

7. Device according to one of Claims 1 to 6, **characterised in that** the coaxial cable (LC3) consists of three coaxially routed conductors (L2, L2, L3), each of which is covered by an insulation layer (IN1; IN2; IN3), that the ground-based communications unit (R) and the control centre (LST) are connected to one another via the first and the second conductor (L1, L2) and that the data provided for transmission to the mobile communications units (Q) is emitted by the third conductor (L3).

8. Device according to Claim 7, **characterised in that** the three conductors (L3) form the external shield, provided with openings (O), of the coaxial cable (LC3).

9. Device according to one of Claims 1 to 8, **characterised in that** the fixed and/or the mobile communications unit (TR; LST) each have at least one transmission and reception level (RX; TX) tuned to the provided data channel, which levels can be connected to the coaxial cable (LC) or the antenna (A, A1) via a selector switch (US).

10. Device according to one of Claims 1 to 9, **characterised in that** the coaxial cable (LC) terminates at a terminating unit (TM), the impedance of which can be changed by the control centre (LST) or that the impedance of the source resistance of the control centre (LST) can be changed in order to avoid stationary signal zero values along the coaxial cable (LC).

11. Device according to one of Claims 1 to 10, **characterised in that** the shield of the coaxial cable (LC; LC3) is connected to the rail (S) via a resistor (RCH) to avoid reflections of the sheath wave, the size of the resistor (RCH) being selected in accordance with the wave impedance of the conductor system routing the sheath wave.

## Revendications

1. Dispositif de transmission pour transmettre des données entre une unité de communication mobile (TR) montée sur un véhicule ferroviaire (ZK) et une unité de communication au sol (LST),
dans lequel l'unité de communication au sol (LST) est reliée à l'unité de communication mobile (TR) pour émettre et/ou pour recevoir des signaux par l'intermédiaire d'un câble coaxial (LC) guidé au moins en partie parallèlement aux rails (S) prévus pour les véhicules (ZK), le câble coaxial étant prévu pour le couplage sans contact à une antenne (A, A1) de l'unité de communication mobile (TR),
dans lequel le câble coaxial (LC) comporte plusieurs ouvertures (O ; Oₙ, Oₙ₊₁) qui permettent l'entrée et la sortie d'un champ alternatif,
dans lequel la longueur des ouvertures (O ; Oₙ, Oₙ₊₁) est petite en comparaison de la longueur d'onde de la fréquence porteuse du champ alternatif et la distance entre les ouvertures est de l'ordre de la longueur d'onde du champ alternatif,
**caractérisé par le fait que**
la transmission s'effectue par induction au moyen d'un champ magnétique alternatif dans la plage de fréquences allant de 0,1 MHz à 50 MHz, et
le câble coaxial (LC) est placé sur le patin de rail (SF) ou dans un creux (LR ou RR) du rail (S) qui est formé d'un côté par le patin de rail (SF), par le champignon de rail (SH) et par l'âme de rail (VE).

2. Dispositif selon la revendication 1,
**caractérisé par le fait que** le câble coaxial (LC) est fixé à au moins une traverse (SW) par des étriers de retenue (HB) ou par des crochets de retenue (BE, HB).

3. Dispositif selon l'une des revendications 1 à 2,
**caractérisé par le fait que** le câble coaxial (LC) est muni d'amplificateurs (RPR) prévus pour le traitement des signaux et/ou d'éléments déphaseurs (PSH1 à PSHn) qui servent à déterminer la position et/ou le sens de marche du véhicule ferroviaire (ZK).

4. Dispositif selon l'une des revendications 1 à 3,
**caractérisé par le fait que** l'antenne (A, A1) de l'unité de communication mobile (TR) est entourée par un blindage non magnétique (AS) qui est en un matériau non magnétique et qui est prévu pour supprimer des ondes électromagnétiques.

5. Dispositif selon la revendication 4,
**caractérisé par le fait qu'**il est prévu dans l'unité de communication mobile (TR) une deuxième antenne (A2) qui est couplée par induction à la première antenne (A1) et qui a au moins approximativement la même fréquence propre que la première antenne (A1).

6. Dispositif selon la revendication 5,
**caractérisé par le fait que** les inductances des antennes (A, A1, A2) comportent des bobines (La) enroulées autour d'un noyau de ferrite (FE).

7. Dispositif selon l'une des revendications 1 à 6,
**caractérisé par le fait que** le câble coaxial (LC3) est constitué de trois conducteurs (L1, 12, L3) guidés de manière coaxiale et enveloppés chacun par une couche isolante (IN1 ; IN2 ; IN3), que l'unité de communication au sol (R) et le poste de contrôle (LST) sont reliés ensemble par l'intermédiaire du premier et du deuxième conducteur (L1, L2) et que les données prévues pour la transmission aux unités de communication mobiles (Q) sont émises par le troisième conducteur (L3).

8. Dispositif selon la revendication 7,
**caractérisé par le fait que** le troisième conducteur (L3) forme le blindage extérieur, muni d'ouvertures (O), du câble coaxial (LC3).

9. Dispositif selon l'une des revendications 1 à 8,
**caractérisé par le fait que** l'unité de communication mobile et l'unité de communication fixe (TR ; LST) comportent au moins chacune un étage d'émission et un étage de réception (RX ; TX) qui sont réglés sur le canal de données prévu et qui peuvent être reliés par l'intermédiaire d'un commutateur (US) au câble coaxial (LC) c'est-à-dire à l'antenne (A, A1).

10. Dispositif selon l'une des revendications 1 à 9,
**caractérisé par le fait que** le câble coaxial (LC) est terminé au niveau d'une unité de terminaison (TM) dont l'impédance est modifiable par le poste de commande (LST) ou que l'impédance de la résistance source du poste de commande (LST) est modifiable pour éviter des positions zéro stationnaires du signal le long du câble coaxial (LC).

11. Dispositif selon l'une des revendications 1 à 10,
**caractérisé par le fait que** le blindage du câble coaxial (LC ; LC3) est relié au rail (S) par l'intermédiaire d'une résistance (RCH) pour éviter des réflexions de l'onde de gaine, la dimension de la résistance (RCH) étant choisie en fonction de l'impédance caractéristique du système de conduction guidant l'onde de gaine.
